# EUROPÄISCHE PATENTSCHRIFT

(11) **EP 1 742 820 B1**
(45) Veröffentlichungstag und Bekanntmachung des Hinweises auf die Patenterteilung: **23.01.2008**
(21) Anmeldenummer: 05746630.2
(22) Anmeldetag: 04.05.2005
(51) Int. Cl.: B60R 21/16

(54) **GASSACK-EINHEIT**
GAS BAG UNIT
UNITE DE SAC GONFLABLE

(30) Priorität: 07.05.2004 DE 102004022740
(43) Veröffentlichungstag der Anmeldung: 17.01.2007
(73) Patentinhaber: AUTOLIV DEVELOPMENT AKTIEBOLAG, 447 83 Vargarda (SE)
(72) Erfinder: SCHANG, Benoit, 78220 Viroflay (FR); PALO, Anders, 461 66 Trollhättan (SE)
(74) Vertreter: Schön, Thilo
(86) Internationale Anmeldenummer: PCT/EP2005/004865
(87) Internationale Veröffentlichungsnummer: WO 2005/110820

(56) Entgegenhaltungen:
- EP-A- 0 855 316
- WO-A-20/04067337
- US-A- 5 536 041
- US-A- 6 106 006

## Beschreibung

### Technisches Gebiet der Erfindung

Die Erfindung betrifft eine Gassack-Einheit nach dem Oberbegriff des Anspruchs 1.

Zum Schutz der Fahrzeuginsassen bei einem Seitenaufprall oder auch bei einem Überschlag des Fahrzeugs werden Vorhang-Gassäcke und Seiten-Gassäcke eingesetzt. Erstgenannte sind am Dachholm des Fahrzeugs angeordnet und decken im aufgeblasenen Zustand die Seitenscheiben und gegebenenfalls die B-Säule des Fahrzeugs ab. Seiten-Gassäcke sind in der Regel in der Fahrzeuglehne angeordnet und blasen sich im Bedarfsfall zwischen dem Oberkörper des Insassen und der seitlichen Fahrzeugstruktur auf. Diesen beiden Gassack-Typen ist gemeinsam, dass sie - im Gegensatz zu den in der Regel kissenförmig ausgebildeten Front-Gassäcken - flächig mit zwei über einen Randbereich verbundenen Seitenwandungen aufgebaut sind. Die Gaszufuhr bei dieser Art von Gassäcken erfolgt zumeist über einen länglich ausgebildeten Gasgenerator, der sich durch eine Öffnung in den Gassack hinein erstreckt. Hierbei befindet sich der Gasgenerator zum Teil im und zum Teil außerhalb des Gassacks. Die Öffnung, durch die sich der Gasgenerator erstreckt, liegt bei gattungsgemäßen Gassäcken im Randbereich, in welchem die beiden Seitenwandungen miteinander verbunden sind.

Meist ist der Gasgenerator, wie erwähnt, länglich ausgebildet und der Bereich des Gassacks, in dem sich die Öffnung befindet, ist L-förmig ausgebildet. Der Gasgenerator erstreckt sich hierbei parallel zur Längserstreckungsrichtung des Gassacks. Da die Ausströmöffnungen in der zumeist zylindrischen Wandung des Gasgenerators aus Sicherheitsgründen (Schubneutralität) in der Regel rotationssymmetrisch angeordnet sind, ergibt sich das Problem, dass das Gassack-Gewebe in der Nähe der Öffnung durch ausströmende energiereiche Gase stark belastet wird.

### Stand der Technik

Aus dem gattungsgemäßen US 5 936 041 A1 und WO 02/079008 A1 ist es bekannt, ein aus Blech bestehendes Halteteil vorzusehen, das einerseits den Gasgenerator an der Fahrzeugstruktur hält und das sich andererseits in die Öffnung des Gassacks hinein erstreckt und dort den Bereich der Ausströmöffnungen teilweise umgibt und somit das anliegende Gewebe schützt.

Neben einem relativ hohen Montageaufwand hat dieses sich in den Gassack hineinerstreckende Blechelement den Nachteil, dass es während der oft sehr langen Zeit, in der der Gassack im Fahrzeug eingebaut und Erschütterungen und Vibrationen ausgesetzt ist, das Gewebe des Gassacks verletzen kann, wodurch es schlimmstenfalls zu einer Fehlfunktion der Gassack-Einheit im Bedarfsfall kommen kann.

### Gegenstand der Erfindung

Hiervon ausgehend ist es Aufgabe der Erfindung, eine gattungsgemäße Gassack-Einheit dahingehend weiterzubilden, dass eine Beschädigung des Gassacks ausgeschlossen wird.

Diese Aufgabe wird durch eine Gassack-Einheit mit den Merkmalen des Anspruchs 1 gelöst.

Erfindungsgemäß sieht die Gassack-Einheit ein separates Gasleitelement aus Kunststoff vor, das im Bereich der Öffnung mit dem Gewebe des Gassacks verbunden ist. Hierbei weist das Gasleitelement einen U- oder Ω-förmigen Abschnitt auf, wobei die Schenkel dieses Abschnitts besonders geeignete Bereiche sind, in denen ein Verbinden, insbesondere Vernähen mit dem Gewebe des Gassacks stattfinden kann.

Durch die Verwendung des passenden Kunststoffs, beispielsweise Polyamid, ist eine Verletzung des Gassack-Gewebes auch bei längerer Lagerung ausgeschlossen, bei Wahl einer geeigneten Wandstärkendicke, beispielsweise 0,5 mm, ergibt sich auch eine gewisse Elastizität.

In einer weiter bevorzugten Ausführungsform, wie sie in den Ansprüchen 10 bis 12 angegeben ist, lässt sich die Gasgenerator-Einheit besonders einfach montieren.

Ein weiterer Vorteil der erfindungsgemäßen Gassack-Einheit ist, dass eine Fehlorientierung des Gasleitelements während der Endmontage im Kraftfahrzeug ausgeschlossen ist.

Bevorzugte Ausführungsformen der Erfindung und weitere Vorteile ergeben sich aus den weiteren Unteransprüchen sowie aus dem nun mit Bezug auf die Figuren näher dargestellten Ausführungsbeispiel. Die Erfindung wird nun anhand eienr Gassack-Einheit mit einem Vorhang-Gassack näher erläutert:

### Kurzbeschreibung der Zeichnungen

- Figur 1: Einen Längsschnitt durch einen Vorhang-Gassack,
- Figur 2: das Gasleitelement aus Figur 2 in einer detaillierten Darstellung,
- Figur 3: den Öffnungsbereich eines Vorhang-Gassacks mit angeschlossenem Gasgenerator,
- Figur 4: einen Gasgenerator, der in ein Gasleitelement eingesteckt ist,
- Figur 4a: eine Variation zum in Figur 4 gezweigten,
- Figur 5: einen Schnitt entlang der Ebene A-A aus Figur 4,
- Figur 6a: ein weiteres Ausführungsbeispiel eines Gasleitelements in perspektivischer Darstellung und
- Figur 6b: einen Schnitt durch das Gasleitelement aus Figur 6a entlang der Ebene E.

### Beschreibung bevorzugter Ausführungsformen

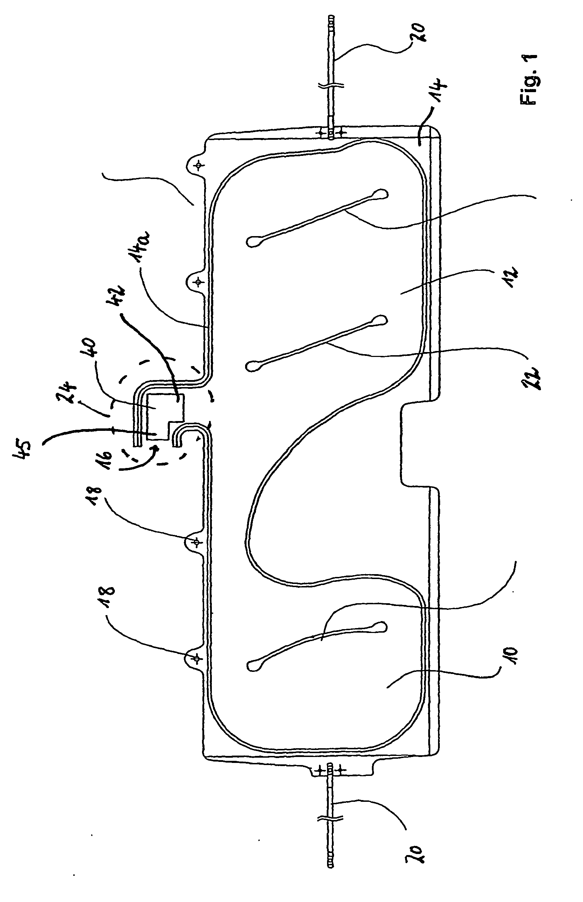

Figur 1 zeigt einen Längsschnitt durch einen Vorhang-Gassack 10. Der Vorhang-Gassack 10 weist zwei Seitenwandungen (von denen hier die Seitenwandung 12 dargestellt ist) auf, die in einem Randbereich 14 miteinander verbunden, beispielsweise miteinander vernäht sind. An der oberen Kante 14a weist der Randbereich 14 die Öffnung 16 zum Einführen eines Gasgenerators und Befestigungslaschen 18 zur Anordnung des Vorhang-Gassacks 10 an einem Dachholm auf. Weiterhin verfügt der Vorhang-Gassack 10 über Zwischennähte 22 zur Konturierung des Gassacks sowie über Spannbänder 20 zur korrekten Positionierung des aufgeblasenen Vorhang-Gassacks vor den Seitenscheiben eines Kraftfahrzeugs.

Der Öffnungsbereich 24 ist L-förmig ausgestaltet, so dass ein länglicher Gasgenerator verwendet werden kann, der sich etwa in der Mitte der oberen Kante 14a teilweise durch die Öffnung 16 in den Gassack hinein erstreckt, wobei der Gasgenerator dann parallel zur Längsrichtung des Gassacks angeordnet ist.

Im L-förmigen Öffnungsbereich 24 ist ein Gasleitelement 40 angeordnet (in Figur 1 stark schematisch dargestellt). Das Gasleitelement 40 besteht aus Polyamid und ist mit dem Gewebe des Vorhang-Gassacks 10 im Öffnungsbereich 24 vernäht. Durch dieses Vernähen wird die Lage des Gasleitelements 40 innerhalb des Vorhang-Gassacks 10 schon bei der Fertigstellung des Vorhang-Gassacks 10 endgültig fixiert und kann bei der späteren Endmontage nicht mehr verrutschen. Das Einnähen des Gasleitelements ist in vielen Fällen die bevorzugte Verbindungsmethode, die notwendige Verbindung kann aber auch durch Verschweißen oder Verkleben zu erzeugt werden.

Das Gasleitelement 40 weist einen vorderen Abschnitt 42 und einen hinteren Abschnitt 45 auf. Der Querschnitt des vorderen Abschnitts 42 ist U-förmig, so dass dieser vordere Abschnitt 42 zwei Schenkel aufweist. Im Bereich der Schenkel erfolgt vorzugsweise das Vernähen des Gasleitelements mit dem angrenzenden Gewebe.

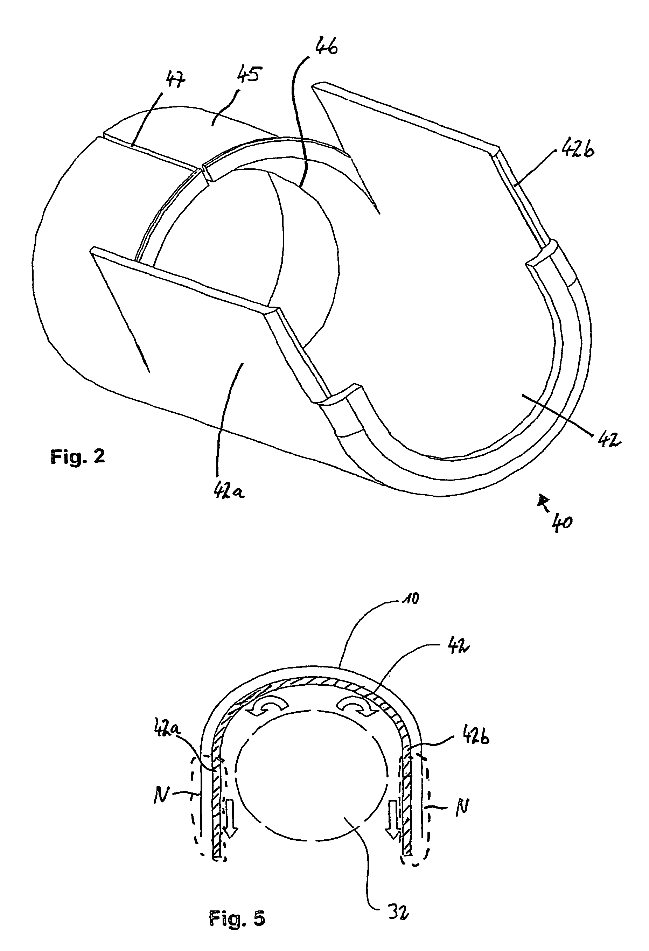

Figur 2 ist eine perspektivische Darstellung eines Gasleitelements 40. Man kann hier gut den hinteren Abschnitt 45 mit kreisförmigem Querschnitt und den vorderen Abschnitt 42 mit U-förmigem Querschnitt erkennen. Beim Zusammenbau wird der Gasgenerator durch den hinteren Abschnitt 45 geschoben und rastet am Rastvorsprung 46 ein. Für die hierfür notwendige Elastizität sorgt der Schlitz 47. Gut zu erkennen sind in Figur 2 die beiden Schenkel 42a,b, über die das Vernähen erfolgt.

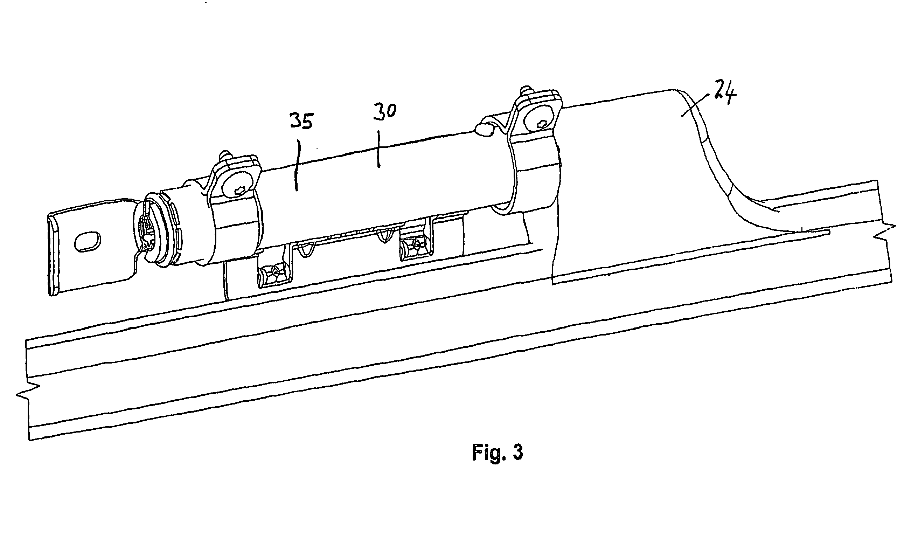

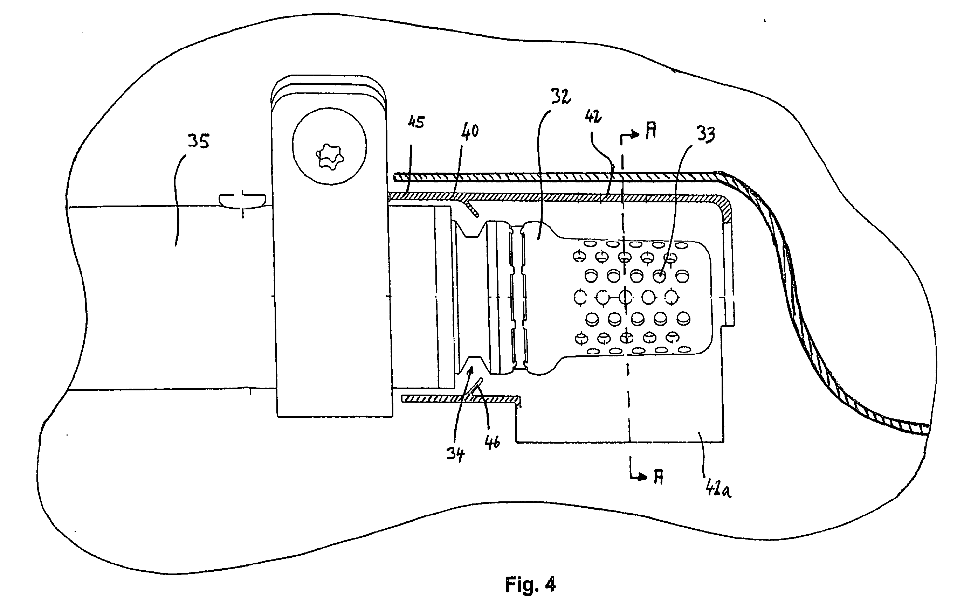

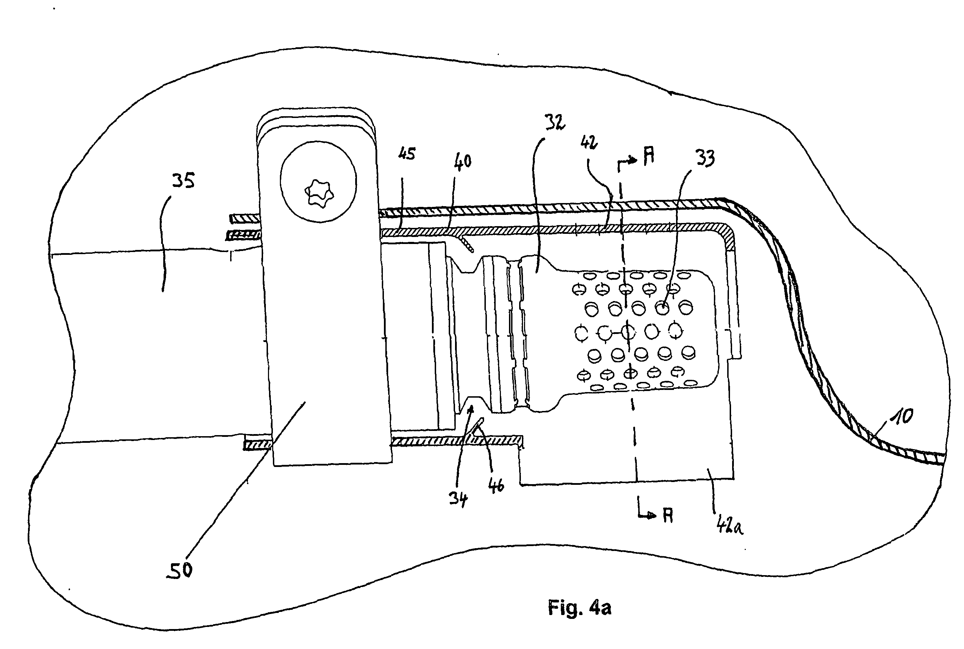

Die Figuren 3 und 4 zeigen den Zustand, in dem der Gasgenerator 30 in die Öffnung 16 des Vorhang-Gassacks 10 eingeführt ist. Wie man erkennen kann, ist der Gasgenerator 30 insgesamt länglich und rotationssymmetrisch aufgebaut. Ein erster Abschnitt 32 ragt in den Gassack hinein und weist die Ausströmöffnungen 33 auf, die von dem vorderen Abschnitt 42 des Gasleitelements teilweise umgeben sind. Weiterhin weist der erste Abschnitt 32 eine Einkerbung 34 auf, die mit dem Rastvorsprung 46 des Gasleitelements 40 in Wirkverbindung steht. Der zweite Abschnitt 35 liegt außerhalb des Gassacks.

Es wäre auch denkbar, einen abgewinkelten Gasgenerator zu verwenden, solange der in den Gassack hineinragende erste Abschnitt im wesentlichen länglich ausgebildet ist.

Figur 4a zeigt eine Variation zum in Figur 4 Gezeigten. Wie in den anderen Ausführungsformen auch, ist das Gasleitelement 40 direkt mit dem Gewebe des Gassacks 10 verbunden, nämlich vernäht, verklebt oder verschweißt. Vorzugsweise erfolgt das Verbinden auch hier im Bereich der Schenkel 42a, 42b. Der hintere Abschnitt 45 des Gasleitelements 40 wird hier durch die Schelle 50, die auch den Gassack 10 am Gasgenerator 30 sichert, auf den zweiten Abschnitt 35 des Gasgenerators 30 geklemmt. Hierdurch ist das Gasleitelement 40 sowohl direkt mit dem Gassack 10 als auch direkt mit dem Gasgenerator 30 verbunden, wodurch auch eine hinreichend stabile Verbindung zwischen dem Gasgenerator 30 und dem Gassack 10 hergestellt wird.

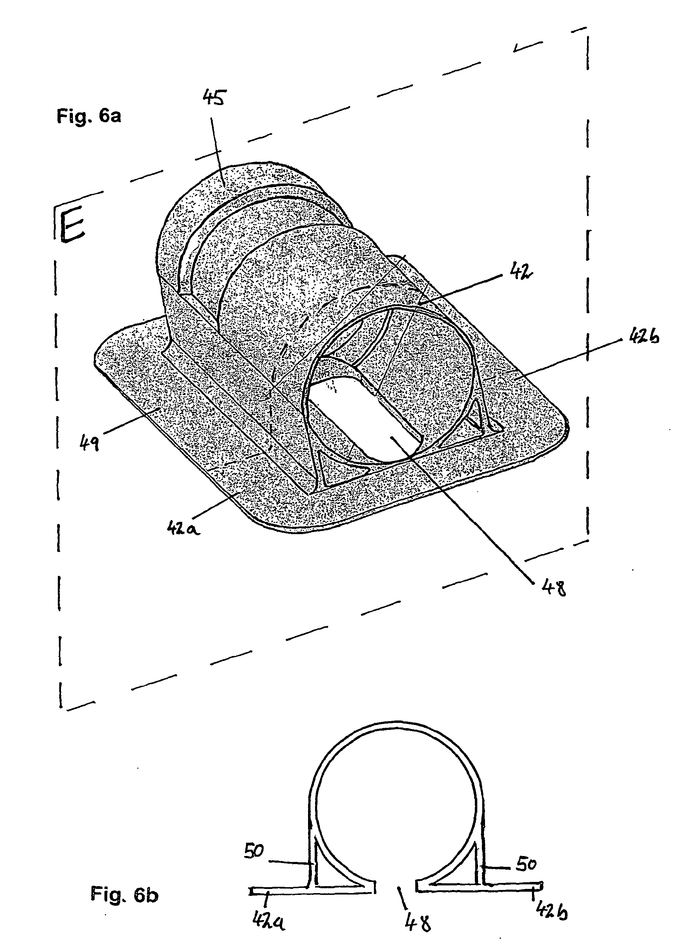

Figur 5 zeigt einen Schnitt durch Figur 4 beziehungsweise der Figur 4a entlang der Schnittebene A-A. Man kann hier sehr gut sehen, wie der U-förmige vordere Abschnitt 42 des Gasleitelements das Gewebe des umliegenden Gassacks 10 vor dem ausströmenden Gas schützt. Der vordere Abschnitt des Gasleitelements umgibt einen gewissen Bereich der Außenwandung des ersten Abschnitts, so dass das aus den sich dort befindenden Ausstömöffnungen strömende Gas vom Gasleitelement umgelenkt wird. Hierbei lenken die Schenkel 42a,b das Gas in den Gassack. Von den sich im unteren Abschnitt der Außenwandung befindenden Ausströmöffnungen gelangt das Gas direkt in den Gassack.

Weiterhin kann man die Nahtbereiche N erkennen, in denen die Schenkel 42a,b mit dem Gewebe des Gassacks 10 vernäht sind. Zur Vereinfachung des Nähvorgangs kann der vordere Abschnitt des Gasleitelements anstatt eines U-förmigen einen Ω-förmigen Querschnitt aufweisen, bei dem die abstehenden Enden des Omegas an einer Lage des Gassackgewebes befestigt werden.

Durch das Einrasten des Gasgenerators am Rastvorsprung 46 erhält der Montierende Rückmeldung, dass sich der Gasgenerator in axialer Richtung in der richtigen Endposition befindet. Aufgrund des rotationssymmetrischen Aufbaus des Gasgenerators kommt es auf die radiale Ausrichtung des Gasgenerators bezüglich des Vorhang-Gassacks nicht an. Hierdurch wird die Montage des Gasgenerators 30 am Vorhang-Gassack 10 bzw. die Montage des Vorhang-Gassacks 10 am Gasgenerator 30 sehr einfach.

Die Figuren 6a und 6b zeigen ein weiteres Ausführungsbeispiel eines Gasleitelements 40. Hierbei ist die Figur 6b ein Schnitt entlang der Ebene E durch den vorderen Abschnitt 42 des Gasleitelements in Figur 6a. Beim Gasleitelement dieses Ausführungsbeispiels sind sowohl vorderer Abschnitt 42 als auch hinterer Abschnitt 45 rohrförmig ausgebildet, wobei der vordere Abschnitt 42 ein Langloch 48 aufweist, durch das zumindest ein Teil des vom Gasgenerator 30 kommenden Gases in den Gassack einströmt. In der Ebene des Langlochs 48 befindet sich eine Bodenplatte 49, so dass sich beim Schnitt durch den vorderen Abschnitt 42 ein Ω-förmiger Querschnitt mit zwei Schenkeln 42 a, b ergibt, wie dies in Figur 6b zu sehen ist. Zur Erhöhung der Stabilität sich weiterhin Streben 50 vorgesehen. Die Verbindung des Gasleitelements mit dem Gassackgewebe erfolgt auch hier vorzugsweise im Bereich der Schenkel 42 a, b, wobei v die gesamte Fläche der Bodenplatte 49 genutzt werden kann.

## Patentansprüche

1. Gassack-Einheit mit einem flächig ausgebildeten Gassack (10) und einem sich zumindest teilweise in den Gassack erstreckenden länglich ausgebildeten Gasgenerator (30) mit Ausströmöffnungen (33), wobei:
- der Gassack (10) zwei über einen Randbereich (14) miteinander verbundene aus Gewebe bestehende Seitenwandungen aufweist,
- im Randbereich (14) eine Öffnung (16) angeordnet ist, durch die sich der Gasgenerator (30) derart erstreckt, dass sich ein länglich ausgebildeter erster Abschnitt (32) des Gasgenerators (30) mit den Ausströmöffnungen (33) innerhalb des Gassacks befindet,
- ein innerhalb des Gassacks (10) im Bereich (24) der Öffnung (16) angeordnetes Gasleitelement (40) das sich im Bereich der Öffnung befindende Gewebe vor aus den Ausströmöffnungen (33) ausströmendem heißen Gas schützt,
**dadurch gekennzeichnet, dass** das Gasleitelement (40) aus Kunststoff besteht, einen vorderen Abschnitt (42) mit einem U-förmigen oder Ω-förmigen Querschnitt mit Schenkeln (42a,42b) aufweist und mit dem Gewebe vernäht, verschweißt oder verklebt ist.

2. Gassack-Einheit nach Anspruch 1, **dadurch gekennzeichnet, dass** das Gasleitelement über die Schenkel (42a,42b) des vorderen Abschnitts (42) mit dem Gewebe verbunden ist.

3. Gassack-Einheit nach Anspruch 2, **dadurch gekennzeichnet, dass** die Schenkel mit dem Gewebe vernäht sind.

4. Gassack-Einheit nach einem der vorangehenden Ansprüche, **dadurch gekennzeichnet, dass** sich ein zweiter Abschnitt (35) des Gasgenerators außerhalb des Gassacks befindet.

5. Gassack-Einheit nach einem der vorangehenden Ansprüche, **dadurch gekennzeichnet, dass** das Gasleitelement einen hinteren Abschnitt (45) mit einem im wesentlichen kreisförmigen Querschnitt aufweist.

6. Gassack-Einheit nach Anspruch 4 und Anspruch 5, **dadurch gekennzeichnet, dass** der hintere Abschnitt (45) des Gasleitelement mittels einer Schelle auf den zweiten Abschnitt (35) des Gasgenerators geklemmt ist.

7. Gassack-Einheit nach einem der vorangehenden Ansprüche, **dadurch gekennzeichnet, dass** das Gasleitelement (40) aus einem Polyamid oder Polypropylen besteht.

8. Gassack-Einheit nach einem der vorangehenden Ansprüche, **dadurch gekennzeichnet, dass** die Wandstärke des Gasleitelements zwischen 0,4 und 0,8mm beträgt.

9. Gassack-Einheit nach einem der Ansprüche 1 bis 7 , **dadurch gekennzeichnet, dass** die Wandstärke zwischen 1,5 und 2,5mm beträgt.

10. Gassack-Einheit nach einem der vorangehenden Ansprüche, **dadurch gekennzeichnet, dass** die Ausströmöffnungen (33) in einer zylindrischen Außenwandung des ersten Abschnitts (32) des Gasgenerators rototionssymmetrisch angeordnet sind.

11. Gassack-Einheit nach Anspruch 10, **dadurch gekennzeichnet, dass** der hintere Abschnitt (45) wenigstens einen Rastvorsprung (46) zur Lagefixierung des Gasgenerators (30) aufweist.

12. Gassack-Einheit nach einem der vorangehenden Ansprüche, **dadurch gekennzeichnet, dass** der Gassack (10) im Bereich der Öffnung L-förmig ausgebildet ist.

## Claims

1. Airbag-unit comprising an airbag (10) of flat design and an oblong-shaped gas generator (30) with outlet openings (33) extending at least in part into the airbag in which:
- the airbag (10) exhibits two side walls made of fabric and being connected to each other via an edge area (14);
- an opening (16) is located in the edge area (14) and the gas generator (30) extends through this opening in a way that an oblong-shaped first section (32) of the gas generator with the outlet openings (33) is located inside the airbag;
- a gas guide element (40) located inside the airbag (10) in the area (24) of the opening (10) protects the fabric in the area of the opening from gas streaming out of the outlet openings (33),
**characterised in that** the gas guide element (40) is made of a plastic material, comprises a front section (42) which has an U-shaped or Ω-shaped cross section with legs (42a,42b), and is sewn, glued or welded to the fabric.

2. Airbag-unit according to claim 1, **characterised in that** the gas guide element is connected to the fabric via the legs (42a,42b) of the front section (42).

3. Airbag-unit according to claim 2, **characterised in that** the legs are sewn to the fabric.

4. Airbag-unit according to one of the preceding claims, **characterised in that** a second section (35) of the gas generator lies outside the airbag.

5. Airbag-unit according to one of the preceding claims, **characterised in that** the gas guide element comprises a rear section (45) with a basically circular cross section.

6. Airbag-unit according to claim 4 and claim 5, **characterised in that** the rear section (45) of the gas guide element is clamped to the second section (35) of the gas generator by means of a clamp.

7. Airbag-unit according to one of the preceding claims, **characterised in that** the gas guide element (40) is made of a polyamide or of polypropylene.

8. Airbag-unit according to one of the preceding claims, **characterised in that** the wall thickness of the gas guide element is between 0.4 and 0.8 mm.

9. Airbag-unit according to one of the claims 1 to 7, **characterised in that** the wall thickness of the gas guide element is between 1.5 and 2.5 mm.

10. Airbag-unit according to one of the preceding claims, **characterised in that** the outflow openings (33) are rotation-symmetrically arranged in a cylindrical outer wall of the first section (32) of the gas generator.

11. Airbag-unit according to claim 10, **characterised in that** the rear section (45) shows at least one snap-on nose (46) for the position fixation of the gas generator (30).

12. Airbag-unit according to one of the preceding claims, **characterised in that** the airbag (10) is L-shaped in the area of the opening.

## Revendications

1. Unité de sac gonflable avec un sac gonflable (10) réalisé de manière plate et avec un générateur de gaz (30) réalisé de manière oblongue, s'étendant au moins partiellement dans le sac gonflable avec des ouvertures d'échappement (33),
■ le sac gonflable (10) présentant deux parois latérales en tissu reliées l'une à l'autre par l'intermédiaire d'une zone de bord (14),
■ une ouverture (16) étant disposée dans la zone du bord (14), à travers laquelle le générateur de gaz (30) s'étend de manière à ce qu'une première section (32) réalisée de manière oblongue du générateur de gaz (30) avec les ouvertures d'échappement (33) se trouve à l'intérieur du sac gonflable,
■ un élément de conduction du gaz (40) étant disposé à l'intérieur du sac gonflable (10) dans la zone (24) de l'ouverture (16), lequel élément protège le tissu se trouvant dans la zone de l'ouverture contre le gaz chaud s'échappant des ouvertures d'échappement (33),
**caractérisée en ce que** l'élément de conduction du gaz (40) se compose de matière synthétique, **en ce qu'**il présente une section avant (42) avec une section transversale en forme de U ou de Ω avec des bras (42a, 42b), et **en ce qu'**il est cousu, soudé, ou collé au tissu.

2. Unité de sac gonflable selon la revendication 1, **caractérisée en ce que** l'élément de conduction du gaz est relié au tissu par l'intermédiaire des bras (42a, 42b) de la section avant (42).

3. Unité de sac gonflable selon la revendication 2, **caractérisée en ce que** les bras sont cousus au tissu.

4. Unité de sac gonflable selon l'une quelconque des revendications précédentes, **caractérisée en ce qu'**une deuxième section (35) du générateur de gaz se trouve en-dehors du sac gonflable.

5. Unité de sac gonflable selon l'une quelconque des revendications précédentes, **caractérisée en ce que** l'élément de conduction du gaz présente une section arrière (45) avec une section transversale essentiellement circulaire.

6. Unité de sac gonflable selon la revendication 4 et la revendication 5, **caractérisée en ce que** la section arrière (45) de l'élément de conduction du gaz est coincée au moyen d'une bride de fixation sur la deuxième section (35) du générateur de gaz.

7. Unité de sac gonflable selon l'une quelconque des revendications précédentes, **caractérisée en ce que** l'élément de conduction du gaz (40) se compose d'un polyamide ou d'un polypropylène.

8. Unité de sac gonflable selon l'une quelconque des revendications précédentes, **caractérisée en ce que** l'épaisseur de paroi de l'élément de conduction du gaz est comprise entre 0,4 à 0,8 mm.

9. Unité de sac gonflable selon l'une quelconque des revendications 1 à 7, **caractérisée en ce que** l'épaisseur de paroi est comprise entre 1,5 et 2,5 mm.

10. Unité de sac gonflable selon l'une quelconque des revendications précédentes, **caractérisée en ce que** les ouvertures d'échappement (33) sont disposées en symétrie de révolution dans une paroi extérieure cylindrique de la première section (32) du générateur de gaz.

11. Unité de sac gonflable selon la revendication 10, **caractérisée en ce que** la section arrière (45) présente au moins une saillie d'arrêt (46) destinée à la fixation de la position du générateur de gaz (30).

12. Unité de sac gonflable selon l'une quelconque des revendications précédentes, **caractérisée en ce que** le sac gonflable (10) est réalisé en forme de L dans la zone de l'ouverture.
